# EUROPÄISCHE PATENTSCHRIFT

(11) **EP 3 682 530 B1**
(45) Veröffentlichungstag und Bekanntmachung des Hinweises auf die Patenterteilung: **13.04.2022**
(21) Anmeldenummer: 18785828.7
(22) Anmeldetag: 07.09.2018
(51) Int. Cl.: H02K 3/38, H02K 3/52, H02K 1/18, H02K 15/095, H02K 3/28, H02K 15/00, H02K 15/02

(54) **STATOR FÜR EINE ELEKTRISCHE MASCHINE, EINE ELEKTRISCHE MASCHINE UND VERFAHREN ZUM HERSTELLEN EINES SOLCHEN STATORS**
STATOR FOR AN ELECTRIC MACHINE, AN ELECTRIC MACHINE AND METHOD FOR MANUFACTURING OF A SUCH STATOR
STATOR POUR UNE MACHINE ÉLECTRIQUE, UNE MACHINE ÉLECTRIQUE ET PROCÉDÉ POUR FABRICATION D'UN TEL STATOR

(30) Priorität: 12.09.2017 DE 102017216084
(43) Veröffentlichungstag der Anmeldung: 22.07.2020
(73) Patentinhaber: Robert Bosch GmbH, 70442 Stuttgart (DE)
(72) Erfinder: KOCH, Roman, 76337 Waldbronn (DE); DEVERMANN, Thomas, 77855 Achern-Fautenbach (DE); CSOTI, Janos Tamas, 76139 Karlsruhe (DE)
(86) Internationale Anmeldenummer: PCT/EP2018/074084
(87) Internationale Veröffentlichungsnummer: WO 2019/052899

(56) Entgegenhaltungen:
- EP-A1- 2 306 622
- WO-A1-2017/133737
- DE-A1-102015 208 425
- FR-A1- 2 923 951

## Beschreibung

Die Erfindung bezieht sich auf einen Stator für eine elektrische Maschine, sowie auf eine elektrische Maschine und auf ein Verfahren zum Herstellen eines solchen Stators nach der Gattung der unabhängigen Ansprüche.

### Stand der Technik

Mit der DE 10 2008 064 523 A1 ist ein Stator einer elektrischen Maschine bekannt geworden, der aus bewickelten Einzelzahnsegmenten zusammengesetzt ist. Die Zahnsegmente weisen eine Isoliermakse auf, in der jeweils zwei Aufnahmetaschen für die beiden Drahtenden einer Spule eingelegt sind. Die Verschalteplatte weist einen Grundring und mehrere isolierende Trennringe auf, zwischen denen axial mehrere Kontaktringe gestapelt sind. An den Kontaktringen sind mehrere Schneidklemmen angeformt, die axial in die Aufnahmetaschenin den Isoliermasken eingepresst werden. Bei solch einer axialen Stapelung der Kontaktringe ist es sehr schwierig, die Vielzahl von Schneidklemmen zuverlässig in die Aufnahmetaschen einzupressen, ohne die Schneidklemmen gegenüber den Kontaktringen zu verbiegen. Dabei besteht die Gefahr, dass die Schneidklemmen die Drahtenden in den Aufnahmetaschen nicht zuverlässig kontaktieren, weil die Schneidklemmen in den Aufnahmetaschen verkanten können. Dieser Nachteil soll durch die erfindungsgmäße Lösung behoben werden.

FR 2923951 offenbart einen Stator für einen bürstenlosen elektromagnetischen Motor mit einer gewickelten Statoreneinheit, einer Isolierlamelle mit Aufnahmetaschen für Schneid-Klemm-Elemente von ringförmigen Leitern einer Verschalteplatte.

### Offenbarung der Erfindung

Der erfindungsgemäße Stator für eine elektrische Maschine ist dem unabhängigen Anspruch 1 und das erfindungsgemäße Verfahren zum Herstellen eines Stators dem unabhängigen Anspruch 14 zu entnehmen.

### Vorteile der Erfindung

Die erfindungsgemäße Vorrichtung und das erfindungsgemäße Verfahren mit den Merkmalen der unabhängigen Ansprüche 1 und 14 hat gegenüber dem Stand der Technik den Vorteil, dass durch das axiale Einfügen der Schneid-Klemm-Elemente in die Aufnahmetaschen eine zuverlässige elektrische Kontaktierung der Spulen hergestellt, ohne dass weitere stoffschlüssige Verbindungsprozesse notwendig sind. Zur Verschaltung der einzelnen Spulen wird auf die Isolierlamelle axial eine Verschalteplatte gefügt. In der Verschalteplatte sind ringförmige Leiterstreifen aus Metall mit daran angeformten Schneid-Klemm-Elementen angeordnet. Die Schneid-Klemm-Elemente erstrecken sich in Axialrichtung über die Leiterstreifen hinaus und werden jeweils in die Aufnahmetaschen axial eingepresst, in denen der Wicklungsdraht in Radialrichtung angeordnet ist. Beim axialen Einfügen der Schneid-Klemm-Elemente umgreift der Gabelkontakt der Schneidklemme den Wicklungsdraht in der Aufnahmetasche und schneidet sich in den Wicklungsdraht ein, um einen elektrischen Kontakt herzustellen. Erfindungsgemäß sind die ringförmigen Leiterstreifen in der Verschalteplatte radial nebeneinander angeordnet und gegeneinander isoliert. Zudem sind die Leiterstreifen in ringförmige Nuten eingefügt, die axial nach unten offen sind. Nach einem Ausführungsbeispiel weist der Querschnitt der Leiterstreifen und der Nuten in Axialrichtung eine höhere Erstreckung auf, als in Radialrichtung. Diese Ausbildung der Leiter mit den Schneid-Klemm-Elementen ist weniger anfällig für ein Verbiegen, wodurch zuverlässigere Schneid-Klemm-Verbindungen hergestellt werden können.

Durch die in den abhängigen Ansprüchen aufgeführten Maßnahmen sind vorteilhafte Weiterbildungen und Verbesserungen der in den unabhängigen Ansprüchen 1 und 14 vorgegebenen Ausführungen möglich. Besonders günstig ist es, die Leiter als Biegestanzteile mit einstückig daran angeformten Schneid-Klemm-Elementen auszubilden. Gleichzeitig sind an den Biegestanzteilen einstückig Phasenanschluss-Pins angeformt, über die die Spulen angesteuert werden. Die Phasenanschluss-Pins sind in entgegengesetzter Richtung zu den Schneid-Klemm-Elementen an den ringförmigen Leitern angeorndet und bilden eine elektrische Schnittstelle zu einer Elektronikeinheit für die Ansteuerung der elektrischen Maschine.

Erfindungsgemäß weisen die ringförmigen Leiter unterschiedliche Radien auf, damit diese isoliert radial nebeneinander angeordnet werden können. Dadurch kann axialer Bauraum eingespart werden. Nach einem Ausführungsbeispiel sind die Schneid-Klemm-Elemente der einzelnen Leiter unterschiedlich gegenüber der ringförmigen Leiter angeformt, derart dass alle Schneid-Klemm-Elemente auf dem gleichen Radius wie alle Aufnahmetaschen angeordnet sind. Hierzu sind die Schneid-Klemm-Verbindungen der radial inneren Leiter beispielsweise radial versetzt nach außen umgebogen, so dass sie auf dem Radiaus des äußeren Leiters liegen, dessen Schneid-Klemm-Elemente sich dann axial geradlienig erstrecken. Erfindungsgemäß werden die Schneid-Klemm-Elemente mittels Montagefingern axial in die Aufnahmetaschen eingedrückt, womit definiert zuverlässige Schneid-Klemm-Verbindungen hergestellt werden können. Dabei sind bevorzugt genau drei Leiter auf drei unterschiedlichen Radien angeordnet.

Besonders günstig ist es, wenn alle Leiter, die in der Verschalteplatte angeordnet sind, genau eine elektrische Phase mit genau einem Anschluss-Pin bilden. Bei einem durchgewickelten Stator sind alle Spulen schon miteinander verbunden, so dass die Leiter direkt die Verbindungsdrähte zwischen den Spulen kontaktieren können und damit die einzelnen Spulen in Reihe oder parallel zueinander verschalten können. Dabei kann bei einer unveränderten Wicklung sowohl eine Dreiecksschalung als auch eine Sternpunktschaltung durch eine entsprechende Anpassung der Leiter erzeugt werden.

Damit die Verschalteplatte - und damit auch die Schneid-Klemm-Elemente - exakt zu den Aufnahmetaschen positioniert werden, sind erfindungsgemäß an der Isolierlamelle Zentrierpins angeformt, die sich in Axialrichtung erstrecken. Entsprechend sind an der Verschalteplatte Zentrieröffnungen in Axialrichtung ausgebildet, in die die Zentrierstifte axial eingreifen. Nach einem Ausführungsbeispiel greifen die Zentrierpins nach dem Zentrieren und dem axialen Fügen der Verschalteplatte beispielsweise die als Durchgangsöffnungen ausgebildete Zentrieraufnahmen vollständig durch. Daher können die freien Enden der Zentrierpins nach dem Fügen der Verschalteplatte plastisch umgeformt werden, um einen Formschluss zu bilden. Dadurch ist die Verschalteplatte zuverlässig axial auf dem Statorgrundkörper fixiert. Die plastische Materialumformung kann besonders einfach durch ein Warmverprägen der aus Kunststoff hergestellten Zentrierpins durchgeführt werden.

Die Verschalteplatte kann einen Außen- und Innendurchmesser aufweisen, der etwa dem Außen- und Innendurchmesser des Statorgrundkörpers entspricht. Damit kann der Bauraum optimal für die Anordnung der Leiter ausgenutzt werden, und gleichzeitig eine mechanische Stabilisierung der Verschalteplatte zu deren definiertem axialen Einpressen in die Isolierlamelle erzielt werden. Besonders günstig kann in einem Winkelabschnitt des Trägerrings aus Kunststoff eine radiale Aussparung am Innendurchmesser ausgeformt werden, in die ein Sensorelement eingefügt werden kann. Dieses ist beispielsweise axial oberhalb der Verschaltungsplatte an der elektrischen Maschine befestigt und greift axial in die Aussparung ein. Das Sensorelement ist bevorzugt als Magnetfeldsensor ausgebildet, der mit einem Magnetfeldgeber des Rotors zusammenwirkt, um dessen Drehlage zu bestimmen.

In einer bevorzugten Ausführung wird in Umfangsrichtung ein Statorzahn nach dem anderen in unmittelbar aufeinanderfolgender Reihenfolge in Umfangsrichtung bewickelt. Die Spulen werden besonders günstig mittels Nadelwickeln gefertigt, wobei jeweils auf einem Statorzahn genau eine Spule gewickelt ist. Durch die Wickelreihenfolge jeweils unmittelbar benachbarter Statorzähne, erstrecken sich die Verbindungsabschnitte des Wickeldrahts zwischen den Spulen jeweils nur über den Umfangswinkel der Statornuten. Dadurch wird verhindert, dass die Verbindungsabschnitte zwischen verschiedenen Spulen axial übereinander angeordnet werden, wodurch die Gefahr von Kurzschlüssen reduziert und axialer Bauraum eingespart wird.

Damit die Leiter axial in den Trägerring eingefügt werden können, bildet dieser beispielsweise an einer axial oberen Seite eine Ringfläche, an der sich die Leiter axial von unten abstützen. Um zur Montage der Verschaltungsplatte definierte Kräfte auf die Schneid-Klemm-Elemente auszuüben, sind in dem Trägerring bevorzugt Montageöffnungen ausgebildet, durch die hindurch axiale Montagestife greifen, um unmittelbar an den Schneid-Klemm-Elementen anzuliegen. Dadurch können die Schneid-Klemm-Elemente mit einer definierten Kraft ohne störenden Einfluss von Querkräften axial sauber in die Aufnahmetaschen eingedrückt werden. Hierzu können an den Schneid-Klemm-Elementen beidseitig Schultern angeformt sein, auf die die Montagestifte axial drücken. Dabei können gleichzeitig zwei Montagestifte pro Schneid-Klemm-Element alle auf dem gleichen Radius die Verschaltungsplatte in die Isolierlamelle drücken, wodurch eine sehr gleichmäßige Kraftverteilung erreicht wird. Für jede Spule kann genau eine Aufnahmetasche und genau ein Schneid-Klemm-Element angeordnet sein, wobei für den Drahtanfang ubzw. das Drahtende eine zusätzliche Aufnahmetasche und einzusätzliches Schneid-Klemm-Element angeordnet sein kann. Im einem Beispiel von zwölf Spulen sind also genau dreizehn Schneid-Klemm-Elemente angeformt, die dann mit 26 Montagestiften axial in genau dreizehn Aufnahmetaschen eingepresst werden.

Im Trägerring können des Weiteren axiale Prüfbohrungen ebenfalls als Durchgangsöffnungen ausgeformt sein. Durch diese können Prüfelektroden die elektrischen Leiter kontaktieren und so nach der Montage überprüfen, ob alle Schneid-Klemm-Verbindungen ordnungsgemäß ausgebildet sind. Dabei kann für jeden Leiter - und damit insbesondere für jede Phase - genau eine Prüfbohrung angeordnet sein, durch die hindurch jeweils eine Prüfelektrode die Leiter unmittelbar berührt.

Am Trägerring sind vorteilhaft des Weiteren axiale Führungskänale für die Phasenanschluss-Pins angeformt. Durch diese werden die axial abstehenden Phasenanschluss-Pins mechanisch stabilisiert. Hierzu sind an den Führungskanälen bevorzugt Versteifungsrippen ausgebildet, insbeondere einstückig mit der Verschalteplatte als Kunststoff-Spritzgussteil. Bei drei Phasen und drei Leitern sind genau drei Führungskanäle ausgebildet, die bevorzugt eng beieinander in einem begrenzten Winkelbereich des Trägerrings angeordnet sind. Dadurch können die Phansenanschluss-Pins einfach mit einer Elektronik axial oberhalb der Verschalteplatte kontaktiert werden.

Ein solches Wickelverfahren eignet sich besonders auch für einen sogenannten verschränkten Stator, bei dem die Statorzähne axial nicht parallel zur Statorachse angeordnet sind, sondern in Umfangsrichtung schräg zur Statorachse verlaufen. Ein solch verschränkter Stator wird beispielsweise mittels Blechlamellen realisiert, die jeweils in Umfangsrichtung geringfügig gegeneinander verdreht aufeinander gestapelt sind. Die einzelnen Blechlamellen bilden zusammen das Statorpaket, das einen in Umfangsrichtung geschlossenen Rückschlussring aufweist, an dem sich radial die Statorzähne anschließen.

Nach einem Ausführungsbeispiel weisen die Aufnahmetaschen in Umfangsrichtung eine größere Erstreckung auf als in Radialrichtung. Dabei wird der Wicklungsdraht von einer ersten Spule radial durch die Aufnahmetasche hindurch an die radiale Außenseite des Stators geführt und anschließend in eine in Umfangsrichtung benachbarte Freisparung radial wieder nach innen zum nächsten Statorzahn geführt. Dadurch sind zwei benachbarte Spulen mittels des Verbindungsabschnitts des Wicklungsdrahtes an der radialen Außenseite der Isolierlamelle auf direktem kürzesten Wege miteinander verbunden. Dabei ist der Wicklungsdraht innerhalb der Aufnahmetaschen straff gehalten, so dass der Gabelkontakt des Schneid-Klemm-Elements beim axialen Einpressen zuverlässig in den Wicklungsdraht einschneidet. Das Schneid-Klemm-Element verklemmt dabei, insbesondere mittels angeformter Rastnasen - in der Aufnahmetasche.

Ein solcher Stator eignet sich besonders für eine elektrische Maschine, bei der der Stator in ein Motorgehäuse axial eingeschoben wird. Dabei sind beidseitig des Stators Lagerdeckel am Motorgehäuse angeordnet, in denen der Rotor aufgenommen ist. Die elektrische Maschine ist beispielsweise als Innenläufer ausgebildet, so dass der Rotor im inneren Hohlraum des Stators drehbar ist. Die Verschalteplatte ist bevorzugt mit einer Ansteuerelektronik verbunden, die die elektronische Kommutierung des Stators regelt und bevorzugt axial oberhalb der Verschalteplatte angeordnet ist. Ein solcher EC-Motor kann besonders vorteilhaft zum Verstellen beweglicher Teile oder als Drehantrieb für Komponenten im Kraftfahrzeug verwendet werden.

Mit dem erfindungsgemäßen Verfahren zum Herstellen des Stators nach unabhängigem Anspruch 1 können die Schneid-Klemm-Verbindungen zwischen der Verschalteplatte und dem Wicklungsdraht deutlich zuverlässiger ausgebildet werden. Dabei wird als Isolierlamelle, die bevorzugt ein separat gefertigtes Bauteil - insbesondere ein Kunststoff-Spritzgussteil - ist, axial auf die Stirnseite des Statorgrundkörpers gefügt. Nach jedem Wickeln der einzelnen Spulen auf die einzelnen Statorzähne wird der Wicklungsdraht radial durch eine Aufnahmetasche für ein Schneid-Klemm-Element geführt.

Nach dem fertigen Bewickeln des Statorgrundkörpers wird die Verschalteplatte axial derart über der Isolierlamelle auf den Statorgrundkörper gefügt, dass die Schneid-Klemm-Elemente der Verschalteplatte axial in die Aufnahmetaschen eingreifen, um die Wicklungsdrähte direkt elektrisch zu kontaktieren. Dabei greifen die Montagefinger, insbesondere alle gleichzeitig, durch die axialen Montageöffnungen in der Verschalteplatte hindurch und liegen die Montagefinge, insbesondere unmittelbar an beidseitigen Schultern der Schneid-Klemm-Elemente auf den Schneid-Klemm-Elementen axial auf, um diese axial in die Aufnahmetaschen einzudrücken, um den Wicklungsdraht elektrisch zu kontaktieren. Bevorzugt wird der Trägerring axial soweit gegen die Isolierlamelle gepresst, bis Messtifte an definierten Abstützflächen am Trägerring eine vorgegebene axiale Position detektieren. Danach wird bevorzugt die Verschalteplatte in dieser Position am Statorgrundkörper befestigt. Besonders vorteilhaft werden hierzu die freien Enden der Fixierstifte, die aus den Zentrieröffnungen ragen, plastisch umgeformt, um einen Formschluss mit der Verschalteplatte zu bilden. Werden nun die axial auf die Schneid-Klemm-Elemente drückenden Montagefinger beispielsweise entfernt, bleiben die Schneid-Klemm-Verbindungen unterhalb der fixierten Verschalteplatte ohne weitere Einwirkung von axialen Vorspannkräften zurück. Dadurch bleibt die Schneid-Klemm-Verbindung auch bei wechselnden Umgebungsbedingungen wie Temperaturschwankungen und Erschütterungen mechanisch stabil. Somit ist ein solcher Stator auch sehr robust gegen hohe Schüttelbelastungen und extreme Wetterbedingungen und deshalb für den Einsatz im Kraftfahrzeug - insbesondere außerhalb der Fahrgastzelle - geeignet.

### Kurze Beschreibung der Zeichnungen

Ausführungsbeispiele der Erfindung sind in den Zeichnungen dargestellt und in der nachfolgenden Beschreibung näher erläutert.

Es zeigen:
Fig. 1 eine Draufsicht auf einen beispielhaften Stator, nachdem ein erster Statorzahn bewickelt ist,
Fig. 2 eine Detailansicht einer bevorzugten Drahtführung in einer Aufnahmetasche des erfindungsgemäßen Stators,
Fig. 3 und 4 Explosionszeichnungen von der Montage der bevorzugten Verschalteplatte des erfindungsgemäßen Stators
Fig. 5 eine Draufsicht auf die fertig montierte bevorzugte Verschalteplatte des erfindungsgemäßen Stators,
Fig. 6 eine Seitenansicht der fertig montierten bevorzugten Verschalteplatte des erfindungsgemäßen Stators und
Fig. 7 eine Schnittdarstellung durch die Befestigungsvorrichtung der Verschalteplatte auf dem Statorgrundkörper des erfindungsgemäßen Stators,

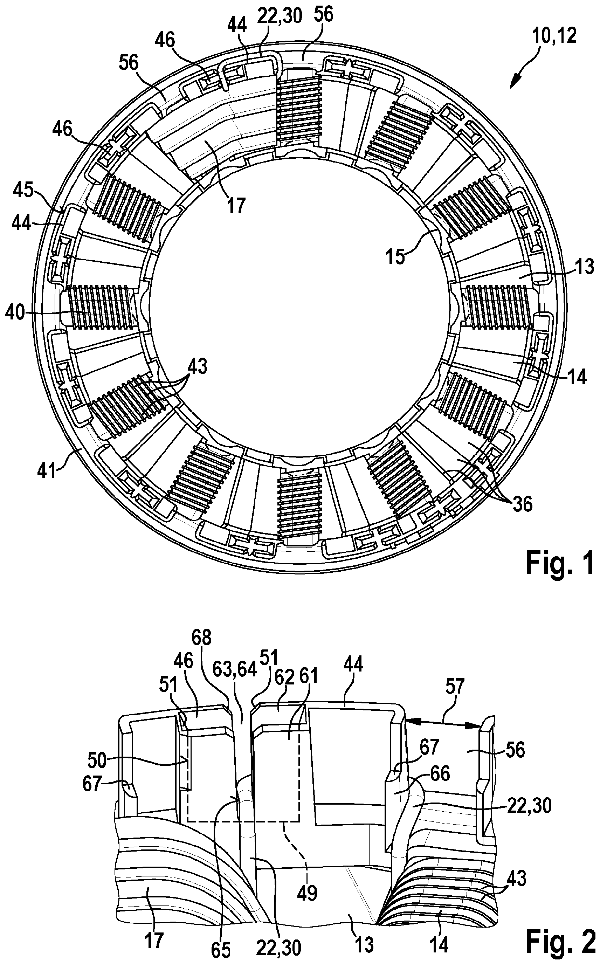

In Fig. 1 ist beispielshaft ein Stator 10 einer elektrischen Maschine 12 dargestellt, der einen in Umfangsrichtung 2 geschlossenen Rückschlussring 38 aufweist, an dem radiale Statorzähne 14 angeformt sind. Bei dieser Ausführung weisen die Statorzähne 14 radial nach innen, so dass innerhalb der Statorzähne 14 ein nicht dargestellter Rotor gelagert werden kann, der als Innenläufer vom Stator 10 angetrieben wird. Der Stator 10 ist aus einzelnen Blechlamellen 36 zusammengesetzt, die in Axialrichtung 3 übereinander gestapelt und zu einem gemeinsamen Lamellenpaket 35 verbunden sind. Die Blechlamellen 36 sind bevorzugt ausgestanzt, so dass die Statorzähne 14 einstückig mit dem Rückschlussring 38 ausgebildet sind. Das Lamellenpaket 35 bildet den Statorgrundkörper 34, der in einer alternativen Ausführung auch einstückig ohne Blechlamellen 36 ausgebildet sein kann. In Fig. 1 sind beispielsweise die einzelnen Blechlamellen 36 in Umfangsrichtung 2 geringfügig gegeneinander verdreht, so dass die Statorzähne 14 nicht parallel zur Axialrichtung 3 verlaufen, sondern in Umfangsrichtung 2 verschränkt ausgebildet sind. Erfindungsgemäß ist an einer ersten axialen Stirnseite 39 des Statorgrundkörpers 34 teine Isolierlamelle 40 angeordnet, die bevorzugt die Stirnseite 39 vollständig mit einem isolierenden Material überdeckt. Bevorzugt ist die Isolierlamelle 40 als Kunststoffspritzgussteil ausgebildet, das axial auf den Statorgrundkörper 34 gepresst ist. Die Statorzähne 14 weisen an ihren radialen Enden einen Zahnkopf 15 auf, der in Umfangsrichtung 2 breiter ausgebildet ist, als der eigentliche Statorzahn 14 im radialen Bereich, der bewickelt wird. Die Isolierlamelle 40 weist im Bereich des Zahnkopfes 15 in Axialrichtung 3 und in Umfangsrichtung 2 einen Überstand 33 auf, der die Spule 17 auf dem Statorzahn 14 hält. Über die Erstreckung des Statorzahns 14 in Radialrichtung 4 sind in der Isolierlamelle 40 Rillen 43 ausgeformt, in die der Wicklungsdraht 22 eingelegt wird. Radial außen weist die Isolierlamelle 40 einen geschlossenen Umfang 41 auf, an dem Führungselemente 44 angeformt sind, die die Verbindungsabschnitte 30 des Wickeldrahts 22 zwischen den einzelnen Spulen 17 führen. Die Führungselemente 44 erstrecken sich in axialer Richtung 3, wobei der Wicklungsdraht 22 in Radialrichtung 4 nach außen geführt wird, um an der radialen Außenseite 45 der Führungselemente 44 in Umfangsrichtung 2 geführt zu werden. Am geschlossenen Umfang 41 der Isolierlamelle 40 sind des Weiteren Aufnahmetaschen 46 ausgebildet, in die der Wicklungsdraht 22 eingelegt wird, um mit Schneid-Klemm-Elementen 70 verbunden zu werden. In einem Ausführungsbeispiel weisen die Aufnahmetaschen 46 in Umfangsrichtung 2 eine größere Abmessung auf, als in Radialrichtung 4. Bevorzugt sind alle Aufnahmetaschen 46 auf dem gleichen Radius bezüglich der Statorachse angeordnet. Wie aus Fig. 1 ersichtlich ist, sind die Aufnahmetaschen 46 bevorzugt im Bereich von Statornuten 13 zwischen den Statorzähnen 14 angeordnet. Dabei ist jedem Statorzahn 14 genau eine Aufnahmetasche 46 zugeordnet, wobei eine zusätzliche Aufnahmetasche 46 für den Wicklungsdrahtanfang angeordnet ist. In Fig. 1 ist der Spulendrahtanfang nicht dargestellt, sondern lediglich schematisch das Wickeln einer einzigen Spule 17. Die Spule 17 wird mittels einer Düse 54 einer Nadelwickelvorrichtung um den Statorzahn 14 gewickelt. Nach dem fertigen Bewickeln einer Spule 17 wird der Wicklungsdraht 22 durch die Aufnahmetasche 46 radial nach außen hindurch geführt und an der radialen Außenseite 45 der Führungselemente 44 in Umfangsrichtung 2 zum nächsten Statorzahn 14 geführt. Hierzu wird der Wicklungsdraht 22 durch eine Freisparung 56 zwischen den Führungselementen 44 wieder radial nach innen zum nächsten Statorzahn 14 geführt.

In Fig. 2 ist eine vergrößerte Ansicht der bevorzugten Drahtführung zweier benachbarter Spulen 17 dargestellt. Die Aufnahmetasche 46 weist eine erste radial innere Taschenwand 61 und eine zweite radial äußere Taschenwand 62 auf. Die erste und die zweite Taschenwand 61, 62 sind etwa parallel zueinander angeordnet. Beide Taschenwände 61, 62 weisen einen axialen Schlitz 63 auf, der jeweils als radiale Durchgangsöffnung 64 ausgebildet ist. Die zweite radiale Taschenwand 62 bildet gleichzeitig auch eine radiale Außenseite 45 der Führungselemente 44. Dabei bildet hier das Führungselement 44 eine Verlängerung der zweiten radialen Taschenwand 62 in Umfangsrichtung 2. An das Führungselement 44 schließt sich in Umfangsrichtung 2 die Freisparung 56 an, wobei die Freisparung 56 eine Seitenwand 66 aufweist, die radial zur radialen Außenseite 45 des Führungselements 44 verläuft. Der Wicklungsdraht 22 wird entlang der Seitenwand 66 radial nach innen geführt und um den nächsten Statorzahn 14 gewickelt. In einer bevorzugten Ausführung werden jeweils die unmittelbar benachbarten Statorzähne 14 unmittelbar nacheinander bewickelt, so dass sich der Verbindungsdraht 30 zwischen zwei einzelnen Spulen 17 jeweils nur über die Statornut 13 in Umfangsrichtung 2 erstreckt. Bei dieser Ausführung ist die axiale Ausdehnung des Führungselement 44 gleich groß, wie die axiale Ausdehnung der Aufnahmetasche 46, um letztere mechanisch zu stabilisieren. Der axiale Schlitz 63 der ersten und/oder zweiten Taschenwand 61, 62 weisen nach unten hin eine Verjüngung 65 auf, so dass der Wicklungsdraht 22 beim Einfügen in den Schlitz 63 in einer definierten Position verklemmt wird. Eine Grundfläche 49 der Aufnahmetasche 46 ist axial tiefer angeordnet, als das untere Ende der Schlitze 63, damit das korrespondierende Schneid-Klemm-Element 70 sich in Axialrichtung 3 über den Wicklungsdraht 30 hinaus zur Taschengrundfläche 49 hin erstrecken kann. Die Schlitze 63 weisen an ihrem axial offenen Ende eine Einführphase 68 auf, damit der Wicklungsdraht 22 leichter eingeführt werden kann. Ebenso sind an Innenseiten 50 der Aufnahmetasche 46 Fügehilfen 51 ausgeformt, beispielsweise als Schrägen, die die Schneid-Klemm-Elemente 70 in der Aufnahmetasche 46 zentrieren.

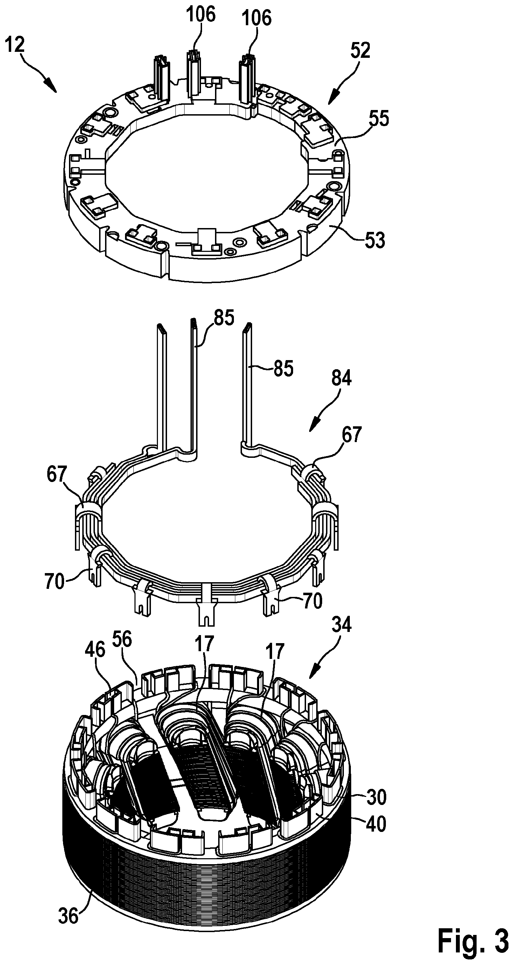

Fig. 3 zeigt beispielhaft eine Explosionsdarstellung, bevor eine Verschalgeplatte 52 axial auf den bewickelten Statorgrundkörper 34 aufgesetzt wird. Die erfindungsgemäße Verschaltepaltte 52 weist einen Trägerring 53 aus Kunststoff auf, in den ringförmige elektrische Leiter 84 axial eingefügt werden. Dazu sind im Trägerring 53 mehrere rinförmige axiale Nuten 59 ausgeformt, in die die Leiter 84 bevorzugt eingeclipst oder eingeklemmt werden. Erfindungsgemäß sind dadurch die Leiter 84 in Radialrichtung 4 durch Isolierwände 58 zwischen den Nuten 59 geführt und elektrisch isoliert. Dabei können die Nuten 59 und die Leiter 84 auch eine vieleckige - insbesondere 12-eckige - Form aufweisen, die einem Ring angenähert ist. Beispielsweise sind genau drei Leiter 84 für drei Phasen 26 im Trägerring 53 angeordnet. Die Leiter 84 sind beispieslweise als Biegestanzteile ausgebildet, die sich über einen wesentlichen Teil des Umfangs des Trägerrings 53 erstrecken. An den Leitern 84 sind beispielsweise jeweils ein Phasenanschluss-Pin 85 angeformt, der sich bevorzugt in Axialrichtung 3 vom Statorgrundkörper 34 weg erstreckt. Die Phasenanschluss-Pins 85 werden in axialen Führungskanälen 106 gehalten, die bevorzugt einstückig an den Trägerring 53 angeformt sind. Nach einem Ausführungsbeispiel dringen die Phasenanschluss-Pins 85 die axialen Führungskanäle 106 in Axialrichtung 3 vollständig durch und werden an ihren freien Enden mit einer Ansteuerelektronik der elektrischen Maschine 12 kontaktiert. In axial entgegengesetzter Richtung zum Statorgrundkörper 34 hin erstrecken sich Schneid-Klemm-Elemente 70 der Leiter 84, die bevorzugt einteilig mit den Leitern 84 ausgestanzt sind. Obwohl in diesem Ausführungsbeispiel die verschiedenen Leiter 84 auf verschiedenen Radien angeordnet sind, sind die Schneid-Klemm-Elemente 70 der Leiter 84 jeweils an Verbindugsbereichen so umgebogen, dass diese alle auf einem einzigen gleichen Radius angeordnet sind, der hier radial außerhalb der ringförmigen Nuten 59 liegt. Nachdem die Leiter 84 mit ihren Phasenanschluss-Pins 85 in den Trägerring 53 eingefügt wurden, wird die gesamte Verschaltepaltte 52 axial mit den Schneid-Klemm-Elementen 70 in die Aufnahmetaschen 46 eingepresst. Im Beispiel eines ununterbrochen durchbewickelten Statorgrundkörpers 34, sind insgesamt eine Aufnahmetasche 46 mehr angeformt, als die Anzahl der Statorzähne 14. Bei zwölf Statorzähnen 14 sind bei diesem Ausführungsbeispiel dreizehn Aufnahmetaschen 46 und entsprechend dreizehn Schneid-Klemm-Elemente 70 ausgebildet. Bevorzugt sind alle Aufnahmetaschen 46 und entsprechend alle Schneid-Klemm-Elemente 70 auf einem einzigen gleichen Radius angeordnet. Nach dem Aufpressen der Schneid-Klemm-Elemente 70 wird die Verschalteplatte 52 fest auf dem Statorgrundkörper 34 fixiert. Danach sind alle Spulen 17 über die Leiter 84 zu beispielsweise drei Phasen 26 verschaltet, die über die Phasenanschluss-Pins 85 angesteuert werden können, um eine elektrische Kommutierung für den Rotor zu realisieren.

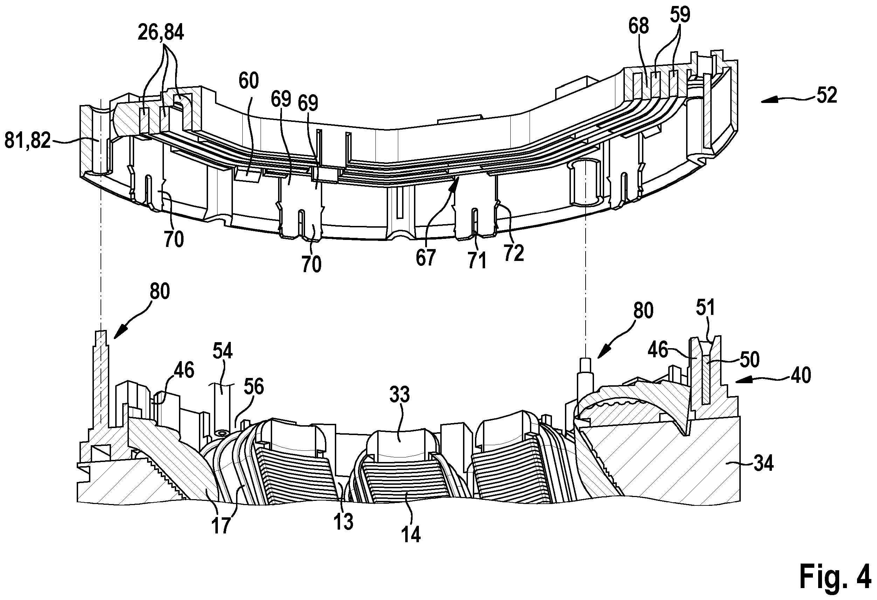

In Fig. 4 ist beispielhaft ein fertig bewickelter Stator 10 dargestellt, auf den nun die Verschalteplatte 52 axial gefügt wird. Erfindungsgemäß sind dazu an der Isolierlamelle 40 sich axial erstreckende Zentrierpins 80 angeformt, die in korrespondierende Zentrieraufnahmen 81 in der Verschalteplatte 52 eingreifen. Die Zentrieraufnahmen 81 sind bevorzugt als axiale Durchgangslöcher 82 ausgebildet. Erfindungsgemäß werden beim axialen Fügen der Verschalteplatte 52 durch die Zentrierstifte 80 und die Zentrieraufnahmen 81 die Schneid-Klemm-Elemente 70 exakt zu den Aufnahmetaschen 46 positioniert. Die Schneid-Klemm-Elemente 70 sind hier an den ringförmigen Leitern 84 angeordnet, die elektrisch isoliert in die Verschalteplatte 52 eingefügt sind. Beispielsweise sind die einzelnen Leiter 84 den verschiedenen Phasen 26 zugeordnet, so dass beispielsweise mehrere Spulen 17 durch einen Leiter 84 miteinander zu einer Phase 26 verbunden werden. Die Leiter 84 sind hier bevorzugt als Stanzbiegeteile ausgebildet, an denen die Schneid-Klemm-Elemente 70 einstückig angeformt sind. Nach einem Ausführungsbeispiel sind die Leiter 84 auf verschiedenen Radien in der Verschalteplatte 52 angeordnet, wobei bevorzugt die Schneid-Klemm-Elemente 70 derart radial umgebogen sind, dass alle Schneid-Klemm-Elemente 70 auf dem gleichen Radius der Aufnahmetaschen 46 angeordnet sind. Die Schneid-Klemm-Elemente 70 können eine größere Breite in Umfangsrichtung aufweisen, als in Radialrichtung 4. Nach einem Ausführungsbeispiel ist mittig bezüglich der Umfangsrichtung 2 an den Schneid-Klemm-Elementen 70 eine Gabel 76 ausgeformt, die beim axialen Fügen über den Wicklungsdraht 22 innerhalb der Aufnahmetasche 46 geschoben wird und dadurch eine Schneid-Klemm-Verbindung ausbildet, die elektrisch leitfähig ist. Die Schneid-Klemm-Elemente 70 werden beispielsweise in die Aufnahmetaschen 46 derart eingepresst, dass sie sich selbst bezüglich des Wicklungsdrahts 22 zentrieren und beispielsweise mittels angeformten Rastnasen 72 an der Innenseite 50 der Aufnahmetaschen 46 verklemmen. In Fig. 4 sind beispielsweise drei separate Leiter 84 für die drei Phasen 26 in der Verschalteplatte 52 eingefügt. Die einzelnen Phasen 26 können optional in einer Dreieckschaltung oder einer Sternpunktschaltung miteinander verschaltet sein, wobei an der Verschalteplatte 52 beispielsweise die drei Phasenanschluss-Pins 85 angeordnet sind, um die Spulen 17 zu bestromen. Schematisch ist die Wickeldüse 54 dargestellt, die in Umfangsrichtung 2 so schmal ist, dass sie radial durch die Freisparung 56 geführt werden kann, um den Wicklungsdraht 22 in der Freisparung 56 abzulegen. Bevorzugt können so alle Spulen 17 mit einem ununterbrochenen Wicklungsdraht 22 durchgewickelt weren.

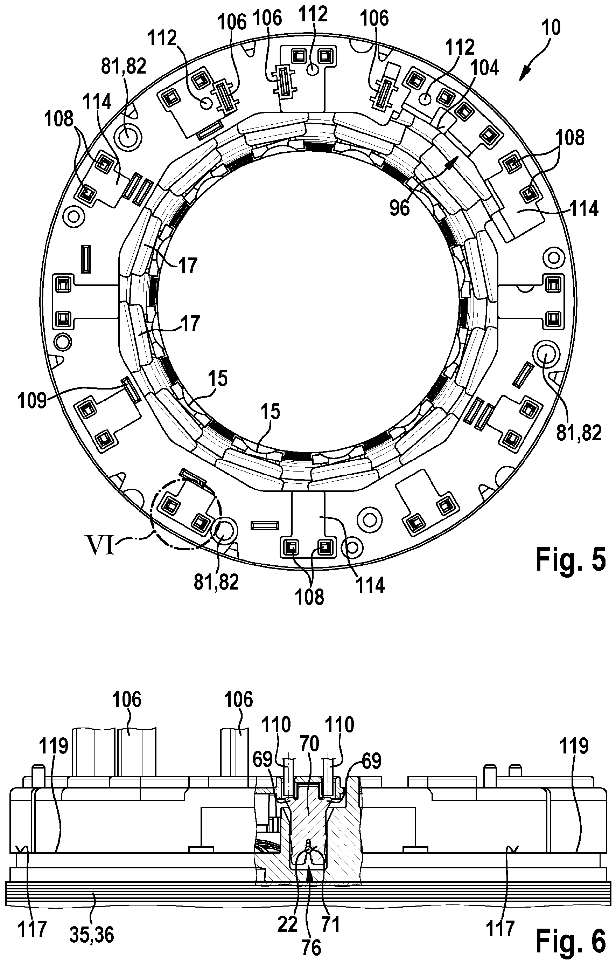

In Fig. 5 ist eine Draufsicht auf die montierte Verschalteplatte 52 dargestellt. Der Außendurchmesser des Trägerrings 53 entspricht beispielsweise etwa dem Außendurchmesser des Statorgrundkörpers 34. Der Innendurchmesser des Trägerrings 53 ist etwas größer, als der Innendurchmesser des Statorgrundkörpers 34. Über einen Winkelbereich 96 ist am Trägerring 53 bevorzugt eine radiale Ausformung 104 ausgespart, in die ein nicht dargestellter Drehlagensensor aufgenommen werden kann. Hierzu ist der Innendurchmesser des Trägerrings 53 in diesem Winkelbereich 96 größer ausgebildet, als über den restlichen Umfang. Der Sensor ist bevorzugt an einem Lagerschild oder einer Elektronikeinheit der elektrischen Maschine 12 befestigt und greift axial in die Aussparung 104 ein. Der Drehlagensensor ist beispielsweise ein Magnetfeldsensor und ist elektrisch nicht mit der Verschalteplatte 52, sondern beispielsweise direkt mit der Elektronikeinheit verbunden, die axial über der Verschalteplatte 52 angeordnet ist. Alle axialen Führungskanäle 106 für die Anschluss-Pins 85 sind bevorzugt in einem begrenzten Winkelbereich von insbesondere weniger als 60° angeordnet. Die Zentrieraufnahmen 81 sind bevorzugt als axiale Durchgangslöcher 82 ausgebildet, durch die die Zentrierstifte 80 vollständig hindurch ragen. Die Zentrieraufnahmen 81 sind beispielsweise über den Umfang verteilt angeordnet, insbesondere mindestens drei Stück. Des Weiteren sind beispielsweise in dem Trägerring 53 Montageöffungen 108 als Durchgangsöffnungen ausgebildet, durch die hindurch Montagefinger 110 direkt auf den Schenid-Klemm-Elementen 70 aufliegen, um diese axial in die Aufnahmetaschen 46 einzupressen. Im Ausführungsbeispiel weist jedes Schneid-Klemm-Element 70 zwei Schultern 69 auf, auf die jeweils ein Montagefinger unmittelbar axial drückt. Zwischen den beiden Schultern 69 sind die Schneid-Klemm-Elemente 70 mittels eines Verbindungsbereichs 67 an die ringförmig Leiter 84 angebunden. Dabei sind an den beiden Schultern 69 eines einzigen Schneid-KlemmElements 70 zwei benachbarte, separate Montageöffnungen 108 ausgebildet, wobei der Verbindungsbereich 67 axial am Trägerring 53 anliegt. Optional können die Verbindungsbereiche 67 Durchgangsbohrungen aufweisen, mittels denen die Leiter 84 mit derm Trägerring 53 warmverstemmt sind. Daher sind über den Umfang verteilt doppelt so viele Montageöffnungen (108) ausgeformt als Schneid-Klemm-Elemente angeordnet also beispielsweise für 12 Statorzähne 14 insgesamt 26 Montageöffnungen (108). Des Weiteren sind am Trägerring 53 bevorzugt axiale Prüföffnungen 112 ausgeformt, durch die hindurch Prüfelektroden an die Leiter 84 angelegt werden können. So ist besipielsweise für jeden Leiter 84 genau eine Prüföffnung 112 ausgebildet. Mittels der Prüfelektroden kann nach der Montage der Verschalteplatte 52 geprüft werden, ob die Schneid-Klemm-Verbindungen zwischen den Leitern 84 und dem Wicklungsdraht 22 zuverlässig ausgebildet sind. Um zu messen wie weit die Verschalteplatte 52 axial gegen dien Statorgrundkörper 34 gepresst werden soll, um die Schneid-Klemm-Verbindungen in eine definierte kräftefreie Position zu bringen, sind bevorzugt an der oberen Seite 55 des Trägerrings 53 definierte Abstützflächen 114 angeformt, an denen beispielsweise ein mechanischer Taster anliegt um die axiale Position des Trägerrings 53 zu messen. Optional sind am Trägerring 53 Haltebereiche oder Halteöffnungen 120 angeformt, an denen ein Greifer die Verschalteplatte 52 bei der Montage greift, um diese in der richtigen Position auf die Zentrierstifte 80 aufzuschieben. In Fig. 5 sind des Weiteren Fertigungsöffnugnen 109 im Trägerring 53 ausgebildet, durch die Schieber des Spritzguss-Werkzeugs greifen können, um Clips-Elemente 60 an den Nuten 59 für die Leiter 84 anzuformen. Beim axialen Einfügen der Leiter 84 in die Nuten 59 werden die Leiter 84 beispielsweise durch das Einclipsen von den Clips-Elementen 60 axial gehalten.

In Fig 6 ist beispielhaft die fertig montierte Verschalteplatte 52 in der Seitenansicht dargestellt, die axial an der Isolierlamelle 40 anliegt. Dazu sind bevorzugt an dem Trägerring 53 an der dem Statorgrundkörper 34 zugewandten Seite definierte Abstützfläche 119 angeformt, die direkt an korrespondierende Anlageflächen 117 der Isolierlamelle 40 anliegen. Die Isolierlamelle 40 kann wiederum an der axialen Stirnseite 39 des Lamellenpakets 35 anliegen. Das axiale Anpressen der Verschalteplatte 52 erfolgt erfindungsgemäß über die Montagefinger 110, die die Verschalteplatte 52 über die Schneid-Klemm-Elemente 70 axial gegen den Statorgrundkörper 34 pressen. Dabei wird beispielsweise der Trägerring 53 in gewissen Grenzen elastisch verformt, um nach dem Entfernen der Montagefinger 110 die Schneid-Klemm-Verbindungen kräftefrei zu halten. Jeweils zwei Montagefinger 110 können bei der Montage der Verschaltepaltte 52 direkt an den gegenüberliegenden Schultern 69 an jedem Schneid-Klemm-Elemnt 70 symmetrisch anliegen. Erfindungsgemäß wird beim axialen Anpressen einerseits der Schneid-Klemm-Kontakt mit dem Wicklungsdraht 22 ausgebildet und gleichzeitig der Trägerring 53 axial exakt positioniert. Danach wird die Verschalteplatte 52 fest fixiert - beispielsweise mittels der Fixierstifte 80.

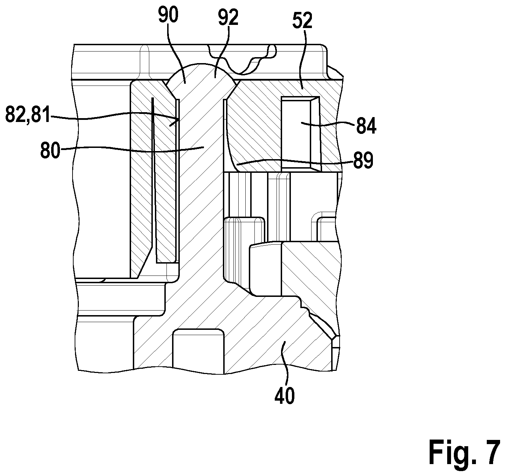

In der Detailzeichnung gemäß Fig. 7 ist beispielsweise die Verschalteplatte 52 axial vollständig auf den bewickelten Stator 10 gefügt. Im Schnitt durch die Zentrieraufnahme 81 ist eine Einführphase 89 erkennbar, über die Bauteil- und Prozess-Toleranzen ausgeglichen werden können.

Nach dem vollständigen axialen Fügen der Zentrierstifte 80 in die korrespondierenden Zentrieraufnahmen 81 kann ein axialer Endbereich 90 der Zentrierstifte 80 plastisch umgeformt werden, um einen Formschluss bezüglich der Axialrichtung 3 zu bilden. Die Zentrierstifte 80 sind hier beispielsweise einstückig mit der Isolierlamelle 40 als Kunststoffspritzgussteil ausgebildet. Dadurch können die Endbereiche 90 mittels Warmverstemmen umgeformt werden, so dass sich am Endbereich 90 ein Stiftkopf 92 ausbildet, der einen größeren Durchmesser hat, als die Zentrieraufnahmen 81.

Dadurch ist die Verschalteplatte 52 axial zuverlässig mit der Isolierlamelle 40 verbunden.

In einer alternativen Ausführung kann der Stator 10 auch ohne Verschränkung der Statorzähne 14 ausgeführt sein, so dass sich die Statorzähne 14 parallel zur Statorlängsachse erstrecken. In einer weiteren Variante kann der Stator 10 für einen Außenläufermotor verwendet werden, bei dem sich die Statorzähne 14 vom Rückschlussring 38 radial nach außen erstrecken, und der Rotor radial außerhalb des Stators 10 angeordnet ist. Ebenso kann in einer Variation der Statorgrundkörper 34 aus zuvor bewickelten Einzelzahnsegmenten zusammengesetzt werden, bei der die Aufnahmetaschen 46 in die jeweiligen Isoliermasken der Einzelzahnsegmente ausgeformt sind.

Es sei angemerkt, dass hinsichtlich der in den Figuren und in der Beschreibung gezeigten Ausführungsbeispiele vielfältige Kombinationsmöglichkeiten der einzelnen Merkmale entsprechend des Schutzumfangs der beigefügten Ansprüche untereinander möglich sind. So kann beispielsweise die konkrete Ausbildung, die Anordnung und Anzahl der Spulen 17, sowie die Ausbildung und Anzahl der Aufnahmetaschen 46 , 48 entsprechend variiert werden. Die Aufnametaschen 46 können unmittelbar in eine an den Statorgrundkörper 34 angespritzte Isolationsmaske oder in eine separat gefertigte Isolierlamelle 40 angeformt werden, die auf den Statorgrundkörper 14 aufgesetzt wird. Ebenso kann die Lage und Ausbildung der Schneid-Klemm-Elemente 70 und die Schnittstelle der Phasenanschluss-Pins 85 zur Elektronikeinheit den Anforderungen der elektrischen Maschine 12 und den Fertigungsmöglichkeiten angepasst werden. Mittels der erfindungsgemäßen an die Leiter 84 angeformten Schneid-Klemm-Elemente können in der Verschalteplatte 52 unterschiedliche Verschaltungen realisiert werden. Dabei kann die Form und Lage der Zentrieraufnahmen 80, der Führungskanäle 106, der Montageöffnungen (108) und oder der Prüfbohrungen 112 entsprechend angepasst werden. Die Erfindung eignet sich in besonderer Weise für den Drehantrieb von Komponenten oder die Verstellung von Teilen im Kraftfahrzeug, ist jedoch nicht auf diese Anwendung beschränkt.

## Patentansprüche

1. Stator (10) für eine elektrische Maschine (12), mit einem Statorgrundkörper (34), der radiale Statorzähne (14) zur Aufnahme von Spulen (17) einer elektrischen Wicklung (18) aufweist, und auf einer ersten axialen Stirnseite (39) des Statorgrundkörpers (34) eine Isolierlamelle (40) mit Aufnahmetaschen (46) für Schneid-Klemm-Elemente (70) aufweist, wobei die Spulen (17) mittels eines Wicklungsdrahts (22) gewickelt sind, der in die Aufnahmetaschen (46) eingelegt ist, wobei eine Verschalteplatte (52) radial nebeneinander angeordnete und gegeneinander isolierte ringfömige Leiter (84) aufweist, an denen jeweils mehrere Schneid-Klemm-Elemente (70) angeordnet sind, die in die Aufnahmetaschen (46) axial eingreifen, um den Wicklungsdraht (22) elektrisch zu kontaktieren, wobei die Verschalteplatte (52) aus Kunststoff gefertigt ist, und axial in Richtung der Isolierlamelle (40) offene ringförmige Nuten (59) aufweist, in die die ringförmigen Leiter (84) eingefügt sind, **dadurch gekennzeichnet, dass** an der Isolierlamelle (40) in Axialrichtung erstreckende Zentrierpins (80) angeformt sind, die in korrespondierende in Axialrichtung ausgebildete Zentrieraufnahmen (81) in der Verschalteplatte (52) axial eingreifen, um die Verschalteplatte (52) und damit auch die Schneid-Klemm-Elemente (70) exakt zu den Aufnahmetaschen (46) zu positionieren.

2. Stator (10) nach Anspruch 1, **dadurch gekennzeichnet, dass** die Leiter (84) als Stanzbiegeteile gefertigt sind, an denen die Schneid-Klemm-Elemente (70) einstückig angeformt sind, und an den Leitern (84) jeweils ein Phasenanschluss-Pin (85) angeformt ist, über den einzelnen Phasen (26) der elektrischen Wicklung (18) bestromt werden.

3. Stator (10) nach Anspruch 1 oder 2, **dadurch gekennzeichnet, dass** genau drei Leiter (84) auf verschiedenen Radien in der Verschalteplatte (52) angeordnet sind, wobei insbesondere die Schneidklemm-Elemente (70) derart angeformt sind, dass alle Schneid-Klemm-Elemente (70) aller Leiter (84) auf einem gleichen Radius angeordnet sind, der dem Radius enpricht, auf dem alle Aufnahmetaschen (46) angeordnet sind.

4. Stator (10) nach einem der vorhergehenden Ansprüche, **dadurch gekennzeichnet, dass** jeder Leiter (84) genau einer Phasen (26) mit genau einem Phasenanschluss-Pin (85) zugeordnet ist, und die Phasen (26) vorzugsweise zu einer Sternpunktschaltung oder einer Dreiecksschaltung miteinander verschaltet sind.

5. Stator (10) nach einem der vorhergehenden Ansprüche, **dadurch gekennzeichnet, dass** die Zentrieraufnahmen (81) als Durchgangslöcher (82) ausgebildet sind und das axiale Ende (92) der Zentrierpins (80) mittels Warmverstemmen umgeformt ist, um einen Formschluss mit der Verschalteplatte (52) zu bilden.

6. Stator (10) nach einem der vorhergehenden Ansprüche, **dadurch gekennzeichnet, dass** die Verschalteplatte (52) einen geschlossenen Trägerring (53) bildet, dessen Außendurchmesser näherungsweise dem Außendurchmesser des Statorgrundkörpers (34) entspricht und dessen Innendurchmesser größer ist, als der Innendurchmesser des Statorgrundkörpers (34) - wobei insbesondere der geschlossene Trägerring (53) über einen bestimmten Winkelbereich einen vergrößerten Innendurchmesser (104) aufweist, um in diesem Bereich einen Drehlagensensor für den Rotor aufzunehmen.

7. Stator (10) nach einem der vorhergehenden Ansprüche, **dadurch gekennzeichnet, dass** alle Spulen (17) direkt nacheinander auf unmittelbar in Umfangsrichtung (2) benachbarte Statorzähne (14) mit einem ununterbrochenen Wickeldraht (22) durchgewickelt sind - insbsondere mittels Nadelwickeln.

8. Stator (10) nach einem der vorhergehenden Ansprüche, **dadurch gekennzeichnet, dass** die Verschalteplatte (52) an einer axial obernen Seite (55) axial durchgängige Montageöffnungen (108) aufweist, durch die hindurch Montagefinger (110) axial greifen können, um unmittelbar an den Schneid-Klemm-Elementen (70) - vorzugsweise an deren Schultern (69 )-anzuliegen, um diese axial in die Aufnahmetaschen (46) einzupressen.

9. Stator (10) nach einem der vorhergehenden Ansprüche, **dadurch gekennzeichnet, dass** an der oberen Seite (55) der Verschalteplatte (52) axiale Prüfbohrungen (112) ausgeformt sind - insbesondere genau eine Prüfbohrung (112) für jeden Leiter (84), vorzgsweise drei für die drei Phasen (26) - durch die hindurch Prüfelektroden die Leiter (84) direkt kontaktieren können, um die Qulität der Schneid-Klemm-Verbindungen zu prüfen.

10. Stator (10) nach einem der vorhergehenden Ansprüche, **dadurch gekennzeichnet, dass** an der oberen Seite (55) der Verschalteplatte (52) axiale Führungskanäle (106) angeformt sind, durch die die Phasenanschluss-Pins (85) axial hindurchragen - und insbesondere genau drei axiale Führungskanäle (106) unmittelbar benachbart sich im radialen Bereich des geschlossenen Trägerrings (53) in Axialrichtung (3) erstrecken.

11. Stator (10) nach einem der vorhergehenden Ansprüche, **dadurch gekennzeichnet, dass** der Statorgrundkörper (34) aus einzelnen Blechlamellen (36) gestapelt ist, die einen gelschlossenen Jochring (38) und daran angeformte radiale Statorzähne (14) aufweisen, wobei insbesondere die einzelnen Blechlamellen (36) in Umfangsrichtung (2) verdreht zueinender angeordnet sind, so dass die Statorzähne (14) in Umfangsrichtung (2) verschränkt ausgebildet sind.

12. Stator (10) nach einem der vorhergehenden Ansprüche, **dadurch gekennzeichnet, dass** die Aufnahmetaschen (46) zwei sich in Umfangsrichtung (2) erstreckende radiale Wände (61, 62) aufweisen, in denen ein radialer Durchbruch (64) als axial nach oben offener Schlitz (63) ausgebildet ist, in den der Wicklungsdraht (22) eingelegt ist, wobei die Schneid-Klemm-Elemente (70) in Umfangsrichtung (2) breiter sind als in Radialrichtung (4) und mittig zur Umfangsrichtung (2) eine Gabel (76) mit Schneidkanten (71) bilden, die axial über den Wickeldraht (22) geschoben sind, um in diesen einzuschneiden und dadurch einen elektrischen Kontakt auszubilden, wobei sich Außenseiten (77) der Schneid-Klemm-Elemente (70) in dem Aufnahmetaschen (46) - vorzugsweise mittels Rastnasen (72) - festklemmen.

13. Elektrische Maschine (12) mit einem Stator (10) nach einem der vorherigen
Ansprüchen, **dadurch gekennzeichnet, dass** der Stator (10) in ein zylindrischen Motorgehäuse eingefügt ist, wobei ein Rotor über Lagerschilde des Motorgehäuses innerhalb des Stators (10) gelagert ist, und insbesondere eine Elektronikeinheit zur Ansteuerung der Phasen (26) axial oberhlab der Verschalteplatte (52) angeordnet ist.

14. Verfahren zum Herstellen eines Stators (10) nach einem der vorherigen Ansprüche mit folgenden Verfahrensschritten:
- die solierlamelle (40) wird axial auf eine Stirnseite (39) des Statorgrundkörpers (34) gefügt
- danach werden auf die Statorzähne (14) Spulen (17) gewickelt, wobei nach jedem Wickeln einer Spule (17) der Wicklungsdraht (22) radial durch die Aufnahmetasche (46) für ein Schneid-Klemm-Element (70) geführt wird
- die Verschalteplatte (52) wird axial über der Isolierlamelle (40) auf den Statorgrundkörper (34) gefügt, derart, dass Montagefinger (110) durch axiale Montageöffnungen (108) in der Verschalteplatte (52) hindurch direkt auf den Schneid-Klemm-Elementen (70) axial aufliegen und diese axial in die Aufnahmetaschen (46) eindrücken, um den Wicklungsdraht (22) elektrisch zu kontaktieren.

15. Verfahren nach Anspruch 14, **dadurch gekennzeichnet, dass**
- die Schneid-Klemm-Elemente (70) axial soweit nach unten gedrückt werden, bis die Verschalteplatte (52) auf Block gegen die Isoliermaske (40) gepresst und so fixiert wird
- und nach dem Entfernen der Montagefinger (110) von den Schneid-Klemm-Elementen (70) keine axialen Kräfte auf die Schneid-Klemm-Verbindungen wirken
- wobei insbesondere gleichzeitig mit zwei Montagefinger (110) unmittelbar auf genau ein Schneid-Klemm-Element (70) gedrückt wird, vorzugsweise auf alle Schneid-Klemm-Elemente (70) gleichzeitig.

## Claims

1. Stator (10) for an electric machine (12), with a stator main body (34) which has radial stator teeth (14) for receiving coils (17) of an electrical winding (18) and has, on a first axial end side (39) of the stator main body (34), an insulating lamination (40) with receiving pockets (46) for insulation-displacement elements (70), wherein the coils (17) are wound by means of a winding wire (22) which is inserted into the receiving pockets (46), wherein an interconnect plate (52) has annular conductors (84) which are arranged radially next to one another and which are insulated from one another and on which in each case a plurality of insulation-displacement elements (70) are arranged which engage axially into the receiving pockets (46) in order to make electrical contact with the winding wire (22), wherein the interconnect plate (52) is manufactured from plastic and has annular grooves (59) which are open axially in the direction of the insulating lamination (40) and into which the annular conductors (84) are fitted,
**characterized in that** centring pins (80) which extend in an axial direction are moulded onto the insulating lamination (40), said centring pins engaging axially into corresponding centring receptacles (81), formed in the axial direction, in the interconnect plate (52) in order to position the interconnect plate (52), and thus also the insulation-displacement elements (70), exactly with respect to the receiving pockets (46).

2. Stator (10) according to Claim 1, **characterized in that** the conductors (84) are manufactured as punched and bent parts on which the insulation-displacement elements (70) are integrally moulded, and a respective phase connection pin (85) via which individual phases (26) of the electrical winding (18) are energized is moulded on the conductors (84) .

3. Stator (10) according to Claim 1 or 2, **characterized in that** precisely three conductors (84) are arranged on different radii in the interconnect plate (52), wherein in particular the insulation-displacement elements (70) are moulded thereon in such a way that all of the insulation-displacement elements (70) of all of the conductors (84) are arranged on an identical radius which corresponds to the radius on which all of the receiving pockets (46) are arranged.

4. Stator (10) according to one of the preceding claims, **characterized in that** each conductor (84) is assigned precisely to one phases (26) with precisely one phase connection pin (85), and the phases (26) are preferably interconnected to form a star point circuit or a triangular circuit.

5. Stator (10) according to one of the preceding claims, **characterized in that** the centring receptacles (81) are designed as through holes (82) and the axial end (92) of the centring pins (80) is deformed by means of hot caulking in order to form a form-fitting connection with the interconnect plate (52).

6. Stator (10) according to one of the preceding claims, **characterized in that** the interconnect plate (52) forms a closed carrier ring (53), the outside diameter of which approximately corresponds to the outside diameter of the stator main body (34) and the inside diameter of which is larger than the inside diameter of the stator main body (34) - wherein in particular the closed carrier ring (53) has an enlarged inside diameter (104) over a certain angular region in order to receive a rotational position sensor for the rotor in said region.

7. Stator (10) according to one of the preceding claims, **characterized in that** all of the coils (17) are continuously wound directly one after another with an uninterrupted winding wire (22) on stator teeth (14) which are directly adjacent in a circumferential direction (2), in particular by means of needle winding.

8. Stator (10) according to one of the preceding claims, **characterized in that** an axially upper side (55) of the interconnect plate (52) has axially continuous installation openings (108) through which installation fingers (110) can reach axially in order to lie directly against the insulation-displacement elements (70) - preferably against the shoulders (69) thereof - in order to press said elements axially into the receiving pockets (46).

9. Stator (10) according to one of the preceding claims, **characterized in that** axial test bores (112) are formed on the upper side (55) of the interconnect plate (52) - in particular precisely one test bore (112) for each conductor (84), preferably three for the three phases (26) - through which test electrodes can make direct contact with the conductors (84) in order to test the quality of the insulation-displacement connections.

10. Stator (10) according to one of the preceding claims, **characterized in that** axial guide channels (106) through which the phase connection pins (85) axially project are moulded on the upper side (55) of the interconnect plate (52) - and in particular precisely three axial guide channels (106) extend in the axial direction (3) directly adjacent in the radial region of the closed carrier ring (53).

11. Stator (10) according to one of the preceding claims, **characterized in that** the stator main body (34) is stacked from individual sheet metal laminations (36) which have a closed yoke ring (38) and radial stator teeth (14) moulded thereon, wherein in particular the individual sheet metal laminations (36) are arranged rotated with respect to one another in the circumferential direction (2), and therefore the stator teeth (14) are formed in a skewed manner in the circumferential direction (2).

12. Stator (10) according to one of the preceding claims, **characterized in that** the receiving pockets (46) have two radial walls (61, 62) which extend in the circumferential direction (2) and in which a radial aperture (64) is formed as an axially upwardly open slot (63) into which the winding wire (22) is inserted, wherein the insulation-displacement elements (70) are wider in the circumferential direction (2) than in the radial direction (4) and, centrally with respect to the circumferential direction (2), form a fork (76) with cutting edges (71) which are pushed axially over the winding wire (22) in order to cut into the latter and, as a result, to form an electrical contact, wherein outer sides (77) of the insulation-displacement elements (70) are securely clamped in the receiving pockets (46) - preferably by means of latching lugs (72).

13. Electric machine (12) with a stator (10) according to one of the preceding claims, **characterized in that** the stator (10) is fitted into a cylindrical motor housing, wherein a rotor is mounted via end shields of the motor housing within the stator (10), and in particular an electronic unit for activating the phases (26) is arranged axially above the interconnect plate (52).

14. Method for producing a stator (10) according to one of the preceding claims, comprising the following method steps:
- the insulating lamination (40) is fitted axially onto an end side (39) of the stator main body (34),
- coils (17) are then wound onto the stator teeth (14), wherein, after each winding of a coil (17), the winding wire (22) is guided radially through the receiving pocket (46) for an insulation-displacement element (70),
- the interconnect plate (52) is fitted axially over the insulating lamination (40) onto the stator main body (34) in such a way that installation fingers (110) through axial installation openings (108) in the interconnect plate (52) axially rest directly on the insulation-displacement elements (70) and press the latter axially into the receiving pockets (46) in order to make electrical contact with the winding wire (22).

15. Method according to Claim 14, **characterized in that**
- the insulation-displacement elements (70) are pressed axially downward until the interconnect plate (52) is pressed to a stop against the insulating mask (40) and is thus secured
- and, after the installation fingers (110) have been removed from the insulation-displacement elements (70), no axial forces act on the insulation-displacement connections,
- wherein two installation fingers (110) are used in particular simultaneously to press directly against precisely one insulation-displacement element (70), preferably against all of the insulation-displacement elements (70) simultaneously.

## Revendications

1. Stator (10) pour une machine électrique (12), comprenant un corps de base de stator (34), qui présente des dents de stator radiales (14) pour recevoir des bobines (17) d'un enroulement électrique (18), et qui présente sur un premier côté frontal axial (39) du corps de base de stator (34) une lamelle isolante (40) comprenant des poches de réception (46) pour des éléments de coupe et de serrage (70), les bobines (17) étant enroulées au moyen d'un fil d'enroulement (22), qui est introduit dans les poches de réception (46), une plaque de connexion (52) présentant des conducteurs annulaires (84) agencés radialement les uns à côté des autres et isolés les uns des autres, sur lesquels sont agencés respectivement plusieurs éléments de coupe et de serrage (70), qui s'engagent axialement dans les poches de réception (46) afin de contacter électriquement le fil d'enroulement (22), la plaque de connexion (52) étant fabriquée en matière plastique, et présentant axialement en direction de la lamelle isolante (40) des rainures annulaires ouvertes (59), dans lesquelles les conducteurs annulaires (84) sont insérés,
**caractérisé en ce que** des broches de centrage (80) s'étendant dans la direction axiale sont formées sur la lamelle isolante (40), qui s'engagent axialement dans des logements de centrage (81) correspondants formés dans la direction axiale dans la plaque de connexion (52), afin de positionner la plaque de connexion (52) et ainsi également les éléments de coupe et de serrage (70) de manière exacte par rapport aux poches de réception (46).

2. Stator (10) selon la revendication 1, **caractérisé en ce que** les conducteurs (84) sont fabriqués sous forme de pièces découpées et pliées, sur lesquelles les éléments de coupe et de serrage (70) sont formés d'un seul tenant, et une broche de raccordement de phase (85) est formée respectivement sur les conducteurs (84), par l'intermédiaire de laquelle des phases individuelles (26) de l'enroulement électrique (18) sont alimentées.

3. Stator (10) selon la revendication 1 ou 2, **caractérisé en ce qu'**exactement trois conducteurs (84) sont agencés sur des rayons différents dans la plaque de connexion (52), les éléments de coupe et de serrage (70) étant notamment formés de telle sorte que tous les éléments de coupe et de serrage (70) de tous les conducteurs (84) sont agencés sur un même rayon, qui correspond au rayon sur lequel sont agencées toutes les poches de réception (46).

4. Stator (10) selon l'une quelconque des revendications précédentes, **caractérisé en ce que** chaque conducteur (84) est associé à exactement une phases (26) avec exactement une broche de raccordement de phase (85), et les phases (26) sont de préférence connectées entre elles pour former un montage en étoile ou un montage en triangle.

5. Stator (10) selon l'une quelconque des revendications précédentes, **caractérisé en ce que** les logements de centrage (81) sont configurés sous forme de trous traversants (82) et l'extrémité axiale (92) des broches de centrage (80) est déformée par matage à chaud afin de former une liaison par complémentarité de forme avec la plaque de connexion (52).

6. Stator (10) selon l'une quelconque des revendications précédentes, **caractérisé en ce que** la plaque de connexion (52) forme un anneau de support fermé (53), dont le diamètre extérieur correspond approximativement au diamètre extérieur du corps de base de stator (34) et dont le diamètre intérieur est supérieur au diamètre intérieur du corps de base de stator (34), l'anneau de support fermé (53) présentant notamment un diamètre intérieur (104) agrandi sur une zone angulaire déterminé, afin de recevoir dans cette zone un capteur de position de rotation pour le rotor.

7. Stator (10) selon l'une quelconque des revendications précédentes, **caractérisé en ce que** toutes les bobines (17) sont enroulées directement l'une après l'autre sur des dents de stator (14) directement voisines dans la direction circonférentielle (2) avec un fil d'enroulement (22) ininterrompu, notamment au moyen d'un enroulement à aiguille.

8. Stator (10) selon l'une quelconque des revendications précédentes, **caractérisé en ce que** la plaque de connexion (52) présente, sur un côté axialement supérieur (55), des ouvertures de montage (108) axialement traversantes, à travers lesquelles des doigts de montage (110) peuvent s'engager axialement afin de s'appuyer directement sur les éléments de coupe et de serrage (70), de préférence sur leurs épaulements (69), afin de presser ceux-ci axialement dans les poches de réception (46).

9. Stator (10) selon l'une quelconque des revendications précédentes, **caractérisé en ce que** des alésages de contrôle axiaux (112) sont formés sur le côté supérieur (55) de la plaque de connexion (52), notamment exactement un alésage de contrôle (112) pour chaque conducteur (84), de préférence trois pour les trois phases (26), à travers lesquels des électrodes de contrôle peuvent contacter directement les conducteurs (84) afin de contrôler la qualité des liaisons de coupe et de serrage.

10. Stator (10) selon l'une quelconque des revendications précédentes, **caractérisé en ce que** des canaux de guidage axiaux (106) sont formés sur le côté supérieur (55) de la plaque de connexion (52), à travers lesquels les broches de raccordement de phase (85) passent axialement, et notamment exactement trois canaux de guidage axiaux (106) directement voisins s'étendent dans la zone radiale de l'anneau de support fermé (53) dans la direction axiale (3).

11. Stator (10) selon l'une quelconque des revendications précédentes, **caractérisé en ce que** le corps de base de stator (34) est empilé à partir de lamelles de tôle individuelles (36), qui présentent une bague de culasse fermée (38) et des dents de stator radiales (14) formées sur celle-ci, les lamelles de tôle individuelles (36) étant notamment agencées en étant tournées les unes par rapport aux autres dans la direction circonférentielle (2), de telle sorte que les dents de stator (14) sont configurées en étant entrecroisées dans la direction circonférentielle (2).

12. Stator (10) selon l'une quelconque des revendications précédentes, **caractérisé en ce que** les poches de réception (46) présentent deux parois radiales (61, 62) s'étendant dans la direction circonférentielle (2), dans lesquelles un percement radial (64) est formé en tant que fente (63) ouverte axialement vers le haut, dans laquelle le fil d'enroulement (22) est introduit, les éléments de coupe et de serrage (70) étant plus larges dans la direction circonférentielle (2) que dans la direction radiale (4) et formant, au milieu dans la direction circonférentielle (2), une fourche (76) comprenant des arêtes de coupe (71), qui sont déplacées axialement sur le fil d'enroulement (22) afin d'entailler celui-ci et de former ainsi un contact électrique, les côtés extérieurs (77) des éléments de coupe et de serrage (70) se serrant dans les poches de réception (46), de préférence au moyen d'ergots d'encliquetage (72).

13. Machine électrique (12) comprenant un stator (10) selon l'une quelconque des revendications précédentes, **caractérisée en ce que** le stator (10) est inséré dans un boîtier de moteur cylindrique, un rotor étant monté à l'intérieur du stator (10) par l'intermédiaire de flasques du boîtier de moteur, et notamment une unité électronique pour la commande des phases (26) étant agencée axialement au-dessus de la plaque de connexion (52) .

14. Procédé de fabrication d'un stator (10) selon l'une quelconque des revendications précédentes, comprenant les étapes de procédé suivantes :
- la lamelle isolante (40) est assemblée axialement sur un côté frontal (39) du corps de base de stator (34),
- ensuite, des bobines (17) sont enroulées sur les dents de stator (14), le fil d'enroulement (22) étant guidé radialement après chaque enroulement d'une bobine (17) à travers la poche de réception (46) pour un élément de coupe et de serrage (70),
- la plaque de connexion (52) est assemblée axialement au-dessus de la lamelle isolante (40) sur le corps de base de stator (34), de telle sorte que des doigts de montage (110) s'appuient axialement directement sur les éléments de coupe et de serrage (70) à travers des ouvertures de montage axiales (108) dans la plaque de connexion (52) et enfoncent axialement ceux-ci dans les poches de réception (46) afin de contacter électriquement le fil d'enroulement (22).

15. Procédé selon la revendication 14, **caractérisé en ce que**
- les éléments de coupe et de serrage (70) sont poussés axialement vers le bas jusqu'à ce que la plaque de connexion (52) soit pressée en bloc contre le masque isolant (40) et soit ainsi fixée
- et après le retrait des doigts de montage (110) des éléments de coupe et de serrage (70), aucune force axiale n'agit sur les liaisons de coupe et de serrage,
- exactement un élément de coupe et de serrage (70) étant notamment poussé directement simultanément avec deux doigts de montage (110), de préférence tous les éléments de coupe et de serrage (70) simultanément.
